# EUROPEAN PATENT SPECIFICATION

(11) **EP 2 348 748 B1**
(45) Date of publication and mention of the grant of the patent: **27.04.2016**
(21) Application number: 09827719.7
(22) Date of filing: 18.11.2009
(51) Int. Cl.: H04N 13/04, G09G 5/00

(54) **STEREOSCOPIC IMAGE DISPLAY AND DRIVING METHOD THEREOF**
STEREOSKOPISCHE BILDANZEIGE UND VERFAHREN ZU IHRER ANSTEUERUNG
AFFICHEUR D'IMAGES STÉRÉOSCOPIQUES ET PROCÉDÉ D'EXCITATION DE CELUI-CI

(30) Priority: 18.11.2008 KR 20080114574; 23.09.2009 KR 20090090073
(43) Date of publication of application: 27.07.2011
(73) Proprietor: LG Electronics Inc., Seoul 150-721 (KR)
(72) Inventor: PARK, Jong Myoung, Seoul 137-724 (KR); YEO, Sang Ok, Seoul 137-724 (KR); LEE, Gi Seok, Seoul 137-724 (KR); LEE, Yun Mi, Seoul 137-724 (KR); LEE, Se Kyu, Seoul 137-724 (KR); PARK, Seong Hong, Seoul 137-724 (KR)
(74) Representative: Beyer, Andreas
(86) International application number: PCT/KR2009/006788
(87) International publication number: WO 2010/058954

(56) References cited:
- WO-A1-2008/144110
- JP-A- H0 951 552
- JP-A- 11 194 742
- JP-A- 11 194 743
- KR-A- 20050 037 726
- US-A1- 2005 128 584
- US-A1- 2006 012 676

## Description

### BACKGROUND OF THE INVENTION

### Field of the Invention

The present invention relates to a 3-dimensional image display and a driving method thereof, and more particularly, to a 3-dimensional image display which can prevent the occurrence of crosstalk, and a driving method thereof.

### Discussion of the Related Art

With recent advances in digital display technology, new displays have been introduced which are capable of displaying realistic, 3-dimensional (3D) images in addition to displaying high-definition images on a large screen, thereby satisfying consumer demand.

Large-screen 3D image displays developed up to now include a polarization type and a parallax barrier type. Especially, the polarization type does not deteriorate resolution of images unlike the parallax barrier type.

The polarization type 3D image display includes an active shutter glasses type in which an active shutter is applied to glasses and a passive glasses type using polarized glasses.

The active shutter type generates parallax using a liquid crystal shutter in glasses over time with respect to a left-eye image and a right-eye image. The passive glasses type generates different polarized signals over time by installing a liquid crystal element in a display and displays alternately left-eye and right-eye images using polarized glasses.

US Patent Application Publ. No. US 2006/0012676 discloses a stereoscopic image display that simultaneously displays an image signal for the right eye and an image signal for the left eye, arranged on an odd horizontal line and an even horizontal line of a frame image, respectively.

A device for displaying left-eye and right-eye images over time includes a micro display (LCD, LCoS, DLP, etc.) and a direct view display (CRT, LCD, PDP, etc.).

### SUMMARY OF THE INVENTION

Accordingly, the present invention is directed to a 3D image display which can reduce mutual interference between a left-eye image and a right-eye image by a double-speed image signal having a black image signal interval upon generating a 3D image signal, and a driving method thereof.

Additional advantages, objects, and features of the invention will be set forth in part in the description which follows and in part will become apparent to those having ordinary skill in the art upon examination of the following or may be learned through practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for driving a three-dimensional image display includes generating a double-speed image signal including a black image signal with no screen signals and including left-eye and right-eye image signals having a shorter period than one frame, with respect to an input image signal in units of frames, wherein the input image signal separately contains a left-eye image and a right-eye image, and generating a driving signal for driving a display panel by the double-speed image signal. Further, an inverted image signal is generated for inverting the left-eye image signal or the right-eye image signal after generating the double-speed image signal.

In another aspect of the present invention, a three-dimensional image display includes a driving signal processor for generating a double-speed image signal including a black image signal with no screen signals and including left-eye and right-eye image signals having a period shorter than one frame, with respect to an input image signal in units of frames, wherein the input image signal separately contains a left-eye image and a right-eye image, and a display panel driven by a driving signal generated from the driving signal processor. The display panel includes a digital/analog converter for generating a drive signal to drive the display panel by the double-speed image signal. The driving signal processor generates an inverted image signal for inverting the left-eye image signal or the right-eye image signal after generating the double-speed image signal.

In a further aspect, a three-dimensional image display includes a driving signal processor for generating a double-speed image signal and an inverted driving signal with respect to an input image signal, generating a double-speed image signal by doubling the input image signal to the same signal upon generating a two-dimensional image signal, and generating a double-speed image signal including a black image signal between a left-eye image signal and a right-eye image signal upon generating a three-dimensional image signal.

In still another aspect, a three-dimensional image display includes a light source, a Polarization Beam Splitter (PBS) for controlling a path of light emitted from the light source, a display panel having a black image signal between a left-eye image signal and a right-eye image signal to achieve a three-dimensional image, wherein light passing through the PBS is incident on the display panel and wherein the display panel is driven by a driving signal having an inverted signal at a period of sum of the left-eye image signal and the right-eye image signal, and a projection lens for projecting an image achieved by the display panel.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a display;
FIGs. 2a to 2e illustrate an example of driving signal waveforms of a display panel;
FIGs. 3a to 3e illustrate an example of driving signal waveforms of a 3D image;
FIG. 4 is a graph illustrating liquid crystal response signals;
FIG. 5 is a graph illustrating the occurrence of crosstalk caused by the signals shown in FIG. 4;
FIGs. 6a to 6f illustrate another example of driving signal waveforms of a 3D image;
FIG. 7 is a graph illustrating liquid crystal response signals;
FIG. 8 is a graph illustrating the occurrence of crosstalk caused by the signals shown in FIG. 7;
FIG. 9 is a schematic diagram illustrating an exemplary embodiment of a 3D display; and
FIG. 10 is a diagram illustrating implementation of a 3D image.

### DETAILED DESCRIPTION OF THE INVENTION

Reference will now be made in detail to the exemplary embodiments of the present invention, examples of which are illustrated in the accompanying drawings. Wherever possible, the same reference numbers will be used throughout the drawings to refer to the same or like parts.

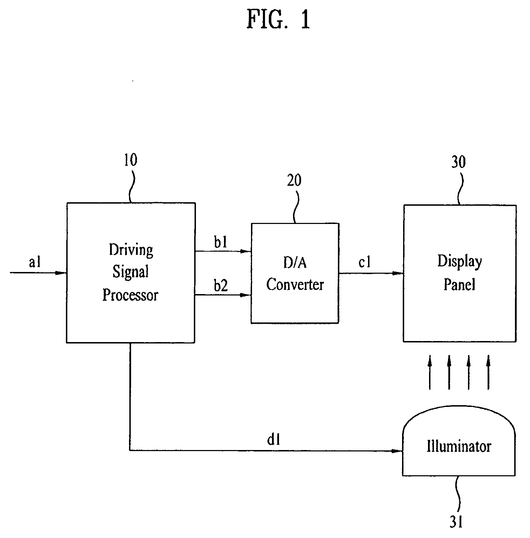

As illustrated in FIG. 1, a driving signal processor 10 of a display receives an input signal a1 which separately includes a left-eye image and a right-eye image to achieve a 3D image, or an input image signal which is input after signal processing is performed in the display.

Upon receiving the input image signal a1, the driving signal processor 10 generates a double-speed image signal b1 and an inverted driving signal b2. The double-speed image signal b1 is obtained by doubling the same frame so that the input image signal a1 can be driven at double speed for the purpose of frame inversion to avoid an after image of a display panel 30. The inverted driving signal b2 serves to determine inversion polarity for frame inversion. Hereinafter, an LCD panel is described as an example of the display panel 30.

The double-speed image signal b1 and the inverted driving signal b2, which are digital signals generated from the driving signal processor 10, are input to a Digital/Analog (D/A) converter 20. The D/A converter 20 then generates a liquid crystal driving signal c1, which is an analog signal, to drive the display panel 30.

The LCD panel 30 includes an illuminator 31 (usually, referred to as a backlight) for supplying light to the LCD panel 30. The driving signal processor 10 generates an illumination control signal d1 which can control the timing at which light generated from the illuminator 31 is irradiated to the LCD panel 30.

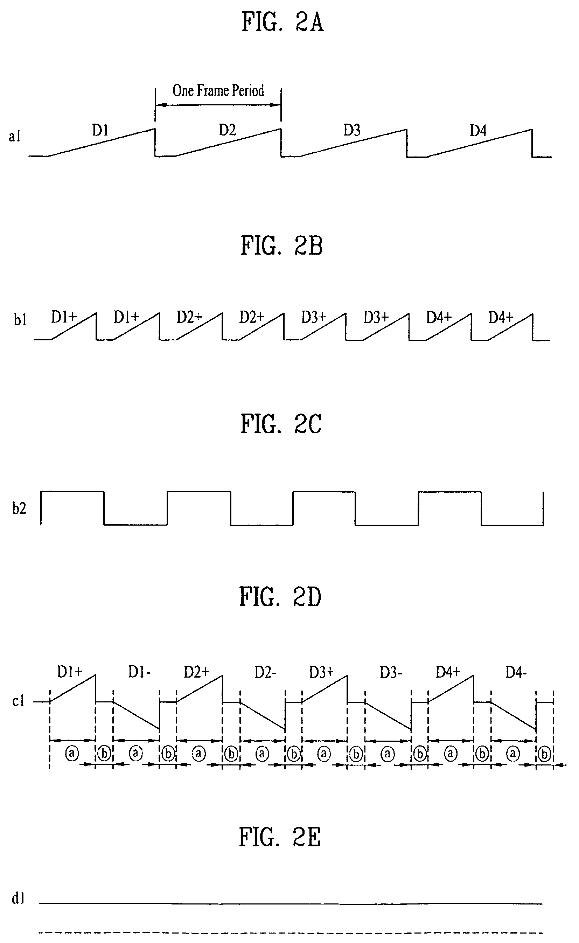

Waveforms of output signals generated through the above process are illustrated in FIGs. 2a to 2e. Namely, if an input image signal a1 is input to the driving signal processor 10 in units of frames, the driving signal processor 10 generates a double-speed image signal b1, a period of which is half a period of the input image signal a1 in one frame, and generates an inverted driving signal b2 for inverting the same signals within one frame.

In the input image signal a1, reference symbols D1, D2,... denote images of respective frames and the respective frame images are comprised of the double-speed image signal b1 having the same double-speed signals D1+, D2+,....

A liquid crystal driving signal c1 is obtained by multiplying the double-speed image signal b1 by the inverted driving signal b2. The liquid crystal driving signal c1 is comprised of image signals D1+, D1-, D2+, D2-,..., each being double the rate of the input image signal and having opposite polarities.

Thus, the liquid crystal driving signal c1 may solve an after image problem in the LCD panel by driving the display using image signals having opposite polarities.

In this case, an illumination control signal d1 of an always high state is generated and the illuminator 31 may remain on at all times.

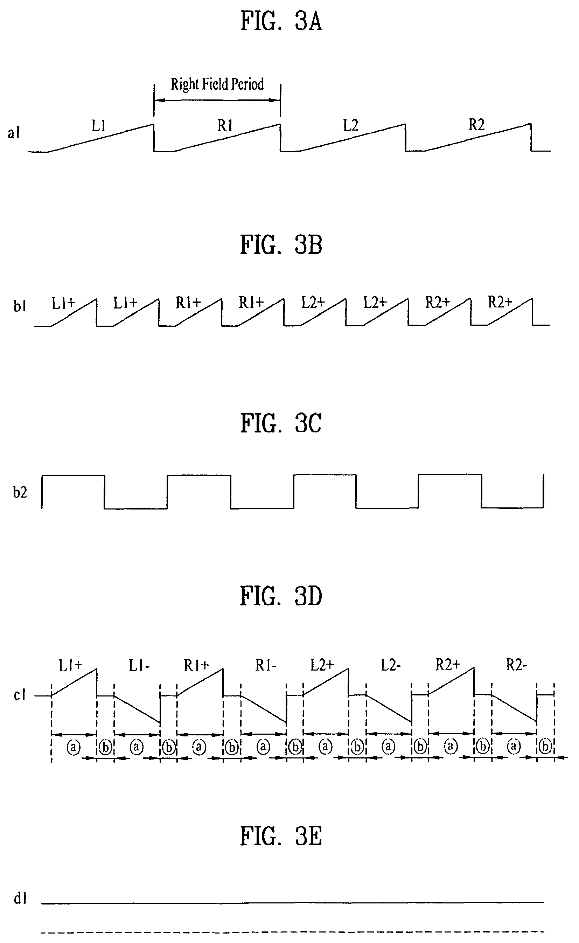

Meanwhile, a 3D image has an input image signal a1 comprised of left-eye images (L1, L2, etc.) and right-eye images (R1, R2, etc.) in units of frames. The 3D image generates output waveforms as illustrated in FIGs. 3a to 3e through the above-described process.

Specifically, the left-eye images (L1, L2, etc.) alternate with the right-eye images (R1, R2, etc.) as shown in FIG. 3a. The alternating image signals are generated as a double-speed image signal b1 including the same double-speed signals (L1+, L1+, R1+, R1+, etc.) as shown in FIG. 3b. The double-speed image signal b1 is generated as a liquid crystal driving signal c1 as shown in FIG. 3d by multiplication with an inverted driving signal b2 shown in FIG. 3c. The liquid crystal driving signal c1 is comprised of inverted image signals (L1+, L1-, R1+, R1-, etc.).

In this case, an illumination control signal d1 is always in a high state so that the illuminator 31 may always remain an on state.

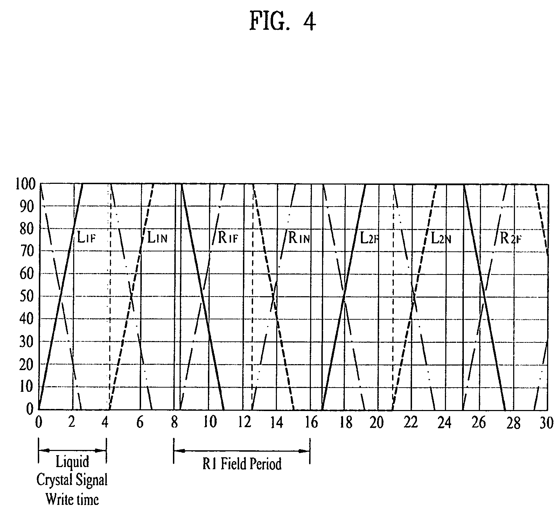

FIG. 4 shows times written into the first pixel and the last pixel of a display panel and liquid crystal response signals of the two pixels in a full High Definition (HD) (1080 pixels) LCD when a frame rate of the 3D input image signal a1 is 60Hz, and a frame rate of each of a left-eye image and a right-eye image is 120 Hz.

Hereinafter, a display characteristic is described in the case of achieving a 3D image in a display panel having such liquid crystal response signals. To this end, image signals of only the first pixel and the last pixel of the display panel are shown for convenience because the display characteristic is sufficiently predicted when the 3D image is displayed in the display panel only by the images of the first and last pixels.

Referring to FIG. 4, solid lines denote liquid crystal brightness signals by the left-eye images (L1, L2, etc.) in the first pixel of the display panel, and dotted lines denote liquid crystal brightness signals by the left-eye images (L1, L2, etc.) in the last pixel.

In addition, dash-dotted lines denote liquid crystal brightness signals by the right-eye images (R1, R2, etc.) in the first pixel of the display panel and dash-dot-dotted lines denote liquid crystal brightness signals by the right-eye images (R1, R2, etc.) in the last pixel.

More specifically, L1F denotes a liquid crystal brightness signal in the first pixel of the display panel by the signal L1, and L1N denotes a liquid crystal brightness signal in the last pixel of the display panel by the signal L1.

Similarly, R1F denotes a liquid crystal brightness signal in the first pixel of the display panel by the signal R1, and R1N denotes a liquid crystal brightness signal in the last pixel of the display panel by the signal R1.

As shown, the signal L1N is started after a liquid crystal signal write time since the signal L1F has been started. A field period of the signal L1 or R1 for displaying the left-eye or right-eye image may be twice the liquid crystal signal write time.

In terms of LCD properties, a response time is needed until full brightness is realized when a liquid crystal signal is enabled and the response time is also needed for liquid crystal to fully darken when the liquid crystal signal is disabled.

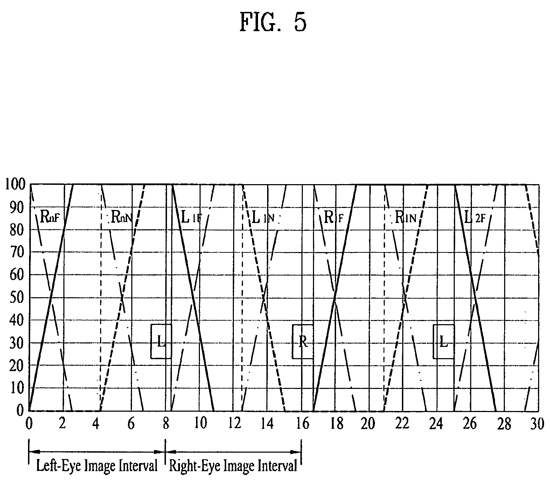

Accordingly, as shown in FIG. 5, when a 3D image is achieved in an LCD, crosstalk indicating that a left-eye image interval and a right-eye image interval interfere with each other may be generated.

In FIG. 5, reference symbol RnF denotes a right-eye image signal of the first pixel of a previous screen invading on a left-eye image interval. RnN denotes a right-eye image signal of the last pixel of a previous screen invading on a left-eye image interval. That is, crosstalk that the right-eye image signals RnF and RnN are present in the left-eye image interval may occur. A left-eye image signal area with no crosstalk in the left-eye image interval occupies only a part indicated by 'L'.

Similarly, reference symbol L1F denotes a left-eye image signal of the first pixel, which has been enabled in the left-eye image interval, invading on a right-eye image interval by a disabled signal. L1N denotes a left-eye image signal of the last pixel invading on the right-eye image interval. A right-eye image signal area with no crosstalk in the right-eye image interval is indicated by 'R'.

As described above, due to the liquid crystal response time and the time for writing an image signal into the display, the right-eye image signal may invade on the left-eye image interval and the left-eye image signal may invade on a right-eye image interval. When realizing a 3D image using a left-eye and right-eye time difference in an LCD, considerable crosstalk may be generated due to the liquid crystal signal write time as well as due to the response speed of liquid crystal.

To improve such a phenomenon, it is favorable to use the driving signals shown in FIGs. 2a to 2e when achieving a 2D image signal by an LCD, and to use the following driving signals when achieving a 3D image signal by the LCD.

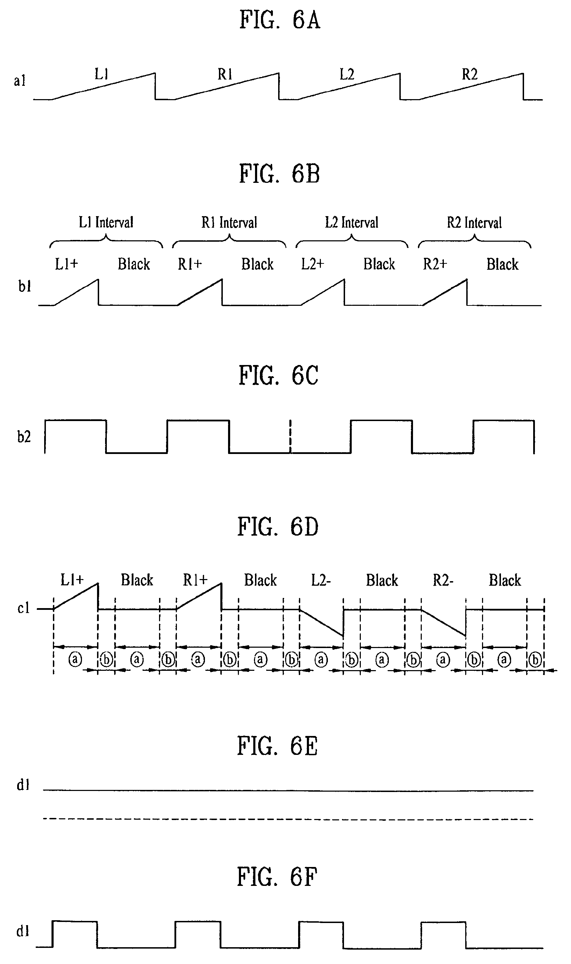

That is, left-eye image signals (L1, L2, etc.) and right-eye image signals (R1, R2, etc.) are alternately located in an input image signal a1 as shown in FIG. 6a. The alternating signals are generated as a double-speed image signal b1 including a black image signal having no screen signal in each period.

The period of the double-speed image signal b1 may be 1/2 the period of the input image signal a1. That is, the speed of the double-speed image signal b1 may be twice the speed of the input image signal a1. However, the double-speed image signal b1 may be a signal of 3 times, 1.5 times, etc. the input image signal a1.

As described above, the double-speed image signal b1 includes the black image signal in each period. Although, in FIG. 6b, the image signal has the same duration as the black image signal, they may have different durations. For example, the length of the black image signal may be longer or shorter than the length of the left-eye or right-eye image signal.

Thus, an L1 interval includes an L1+ signal and a black signal, and an R1 interval includes an R1+ signal and a black signal. Similarly, an L2 interval includes an L2+ signal and a black signal, and an R2 interval includes an R2+ signal and a black signal.

The driving signal processor 10 generates an inverted driving signal b2 for frame inversion. The inverted driving signal b2 has a period of sum of a pair of a left-eye image signal and a right-eye image signal constituting one image.

That is, the period of the inverted driving signal b2 is changed after the L1+ signal and R1+ signal.

Accordingly, a panel driving signal c1 includes an L1+ signal, a black signal, an R1+ signal and a black signal of one period. From an L2- signal, inverted signals are generated during the same length of one period. Again, normal signals (non-inverted signals) are generated after one period.

In the driving signal c1, an interval ⓐ denotes an active interval during which the driving signal is written into liquid crystal, and an interval ⓑ denotes a dummy interval during which writing is not performed.

As shown in FIG. 6e, an illumination control signal d is always in a high state so that the illuminator 31 may remain on state at all times.

However, in the above case, the same function may be performed by turning off the illuminator 31 in a black image signal interval.

That is, illumination may be turned off while the black signal shown in FIG. 6d is generated. Meanwhile, even when the same double-speed signal is generated without generating the black signal as shown in FIG. 3d, the occurrence of crosstalk may be suppressed by turning off the illumination while at least one double-speed signal is generated.

Namely, as shown in FIG. 6f, even when the same double-speed signal is generated without generating the black signal, the occurrence of crosstalk may be suppressed by turning off illumination by the illuminator 31 in an interval during which a subsequent double-speed signal is generated.

Thus, at a prescribed part of the double-speed image signal, for example, at a part where a subsequent double-speed signal is generated, the illumination may be turned off. In this case, in an illumination off interval, the black signal may be generated or the double-speed signal may be generated.

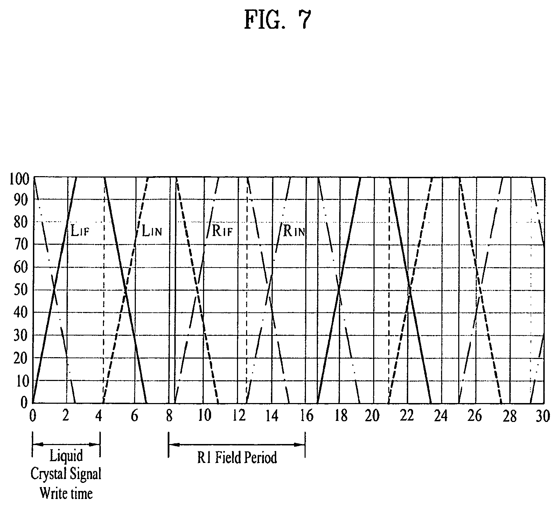

FIG. 7 shows input times of signals written into the first pixel and the last pixel of a display panel in an LCD and liquid crystal response signals of the two pixels.

In FIG. 7, L1F denotes a liquid crystal brightness signal of the first pixel by the signal L1, and L1N denotes a liquid crystal brightness signal of the last pixel by the signal L1. Similarly, R1F denotes a liquid crystal brightness signal of the first pixel by the signal R1, and R1N denotes a liquid crystal brightness signal of the last pixel by the signal R1.

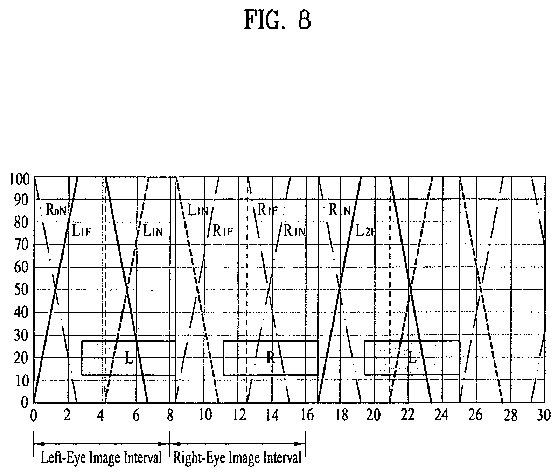

It can be seen in FIG. 7 that an interval between the liquid crystal brightness signals becomes wider. Accordingly, as shown in FIG. 8, crosstalk due to a liquid crystal signal write time is eliminated and only crosstalk due to a liquid crystal response speed remains, thereby remarkably reducing an area where crosstalk between the left-eye image and right-eye image occurs.

In FIG. 8, a part indicted by 'L' denotes a left-eye image signal area having no crosstalk in a left-eye image interval, and a part indicated by 'R' denotes a right-eye image signal area having no crosstalk in a right-eye image interval. As shown, an area where crosstalk occurs is remarkably reduced.

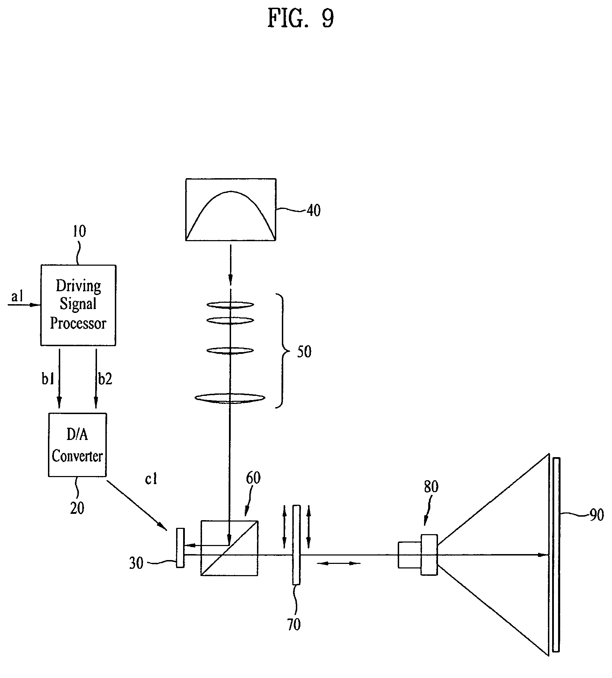

As an exemplary embodiment of a 3D image display realized by the above-described method, a liquid crystal projection display (an LCD, LCoS, etc.) is shown in FIG. 9.

In the projection display which can achieve a 3D image, light emitted from a light source 40 is incident on a Polarization Beam Splitter (PBS) 60 by an illumination lens group 50. The light which is incident on the PBS 60 forms an image by a display panel 30 which is driven by an output driving signal c1 generated through a driving signal processor 10 and the D/A converter 20, and is projected onto a screen 90 through a projection lens 80.

The output driving signal c1 drives the display panel 30 through the following process.

First, the driving signal processor 10 receives an input signal a1 which separately includes a left-eye image and a right-eye image to achieve a 3D image, or an input image signal which is input after signal processing is performed in the display.

The driving signal processor 10 generates a double-speed image signal b1 by doubling the same frame of the input image signal a1 of the display panel 30. A black image signal is located between each left-eye image and each right-eye image constituting one scene.

The driving signal processor 10 also generates an inverted driving signal b2 which serves to determine inversion polarity and has a period of sum of the left-eye image and the right-eye image.

The double-speed image signal b1 and the inverted driving signal b2, which are digital signals generated from the driving signal processor 10, are input to the D/A converter 20. The D/A converter 20 then generates a liquid crystal driving signal c1, which is an analog signal, to drive the display panel 30.

The polarization conversion cell 70 polarizes the left-eye image and right-eye image generated from the display panel 30 so as to achieve different polarized states. A liquid crystal panel may be used as the polarization conversion cell 70.

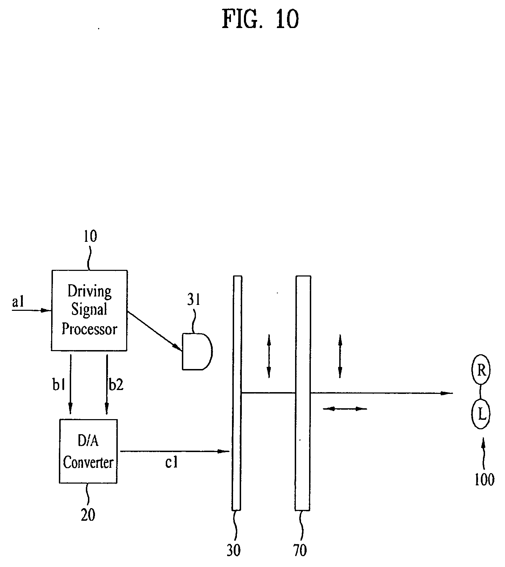

Namely, as shown in FIG. 10, the left-eye image and the right-eye image generated from the display panel 30 have different polarized states by the polarization conversion cell 70 and viewers can view a 3D image through polarized glasses 100 including a left-eye glass L and a right-eye glass R corresponding to the two different polarized states.

Accordingly, the left-eye image and the right-eye image generated from the display panel 30 can be independently seen through the left-eye glass L and the right-eye glass R of the polarized glasses 100, thereby producing a stereoscopic image.

Meanwhile, upon generating the double-speed image signal and the inverted driving signal with respect to the input image signal, the display may generate different double-speed image signals and the inverted driving signal when generating a 2D image signal and when generating a 3D image signal.

Namely, the driving signal processor 10 may be controlled to generate a double-speed image signal by doubling the input image signal to the same signal when generating the 2D image signal, and to generate a double-speed image signal including a black image signal between a left-eye image signal and a right-eye image signal when generating the 3D image signal.

Meanwhile, when the display panel 30 receives light generated from an illuminator 31, the illuminator 31 may turn off illumination in an interval during which the black image signal is generated and a normal double-speed image signal may be generated instead of the black image signal in this interval.

In this case, it is favorable for the driving signal processor 10 to generate an inverted image signal having a period of sum of the left-eye image signal and the right-eye image signal upon generating the 3D image signal.

An LCD panel may be used as the display panel 30, and the display panel 30 is applicable to all devices using LCD panels such as LCD TVs, monitors, etc.

The present invention uses a liquid crystal driving signal including a black signal to reduce interference between a left-eye image and a right-eye image caused by slow write speed, thereby realizing a high-quality 3D image.

## Claims

1. A method for driving a three-dimensional image display, comprising:
generating a double-speed image signal (b1) including a black image signal with no screen signals and including left-eye and right-eye image signals (L1+, R1+) having a shorter period than one frame, with respect to an input image signal (a1) in units of frames, wherein the input image signal (a1) separately contains a left-eye image (L1) and a right-eye image (R1,
**characterized in that**
the method further comprises:
generating an inverted driving signal (b2) for inverting the left-eye image signal (L1+) or the right-eye image signal (R1+) after generating the double-speed image signal (b1); and
generating a driving signal (c1) for driving a display panel (30) by multiplying the double-speed image signal (b1) by the inverted driving signal (b2).

2. The method of claim 1, wherein the inverted driving signal (b2) has a period of sum of a pair of the left-eye image signal (L1+) and the right-eye image signal (R1+).

3. The method of claim 1, wherein the driving signal (c1) includes an active interval (a) during which the display panel (30) is driven by the left-eye image signal (L1+) or the right-eye image signal (R1+) and a dummy interval (b) during which the display panel (30) is not driven.

4. The method of claim 1, wherein the black image signal is located between the left-eye image signal (L1+) and the right-eye image signal (R1+).

5. The method of claim 1, further comprising generating an illumination control signal (d1) for controlling illumination irradiated to the display panel (30) according to the double-speed image signal (b1).

6. The method of claim 5, wherein the generating of the illumination control signal (d1) includes generating a signal for turning off illumination in an interval during which the black image signal of the double-speed image signal (b1) is generated.

7. A three-dimensional image display, comprising:
a driving signal processor (10) for generating a double-speed image signal (b1) including a black image signal with no screen signals and including left-eye and right-eye image signals (L1+, R1+) having a period shorter than one frame, with respect to an input image signal (a1) in units of frames, wherein the input image signal (a1) separately contains a left-eye image and a right-eye image; and
a display panel (30),
**characterized in that**
the driving signal processor (10) generates an inverted driving signal (b2) for inverting the left-eye image signal (L1+) or the right-eye image signal (R1+) after generating the double-speed image signal (b1),
wherein the display panel (30) includes a digital/analog converter (20) for generating a driving signal (c1) to drive the display panel (30) by multiplying the double-speed image signal (b1) by the inverted driving signal (b2).

8. The three-dimensional image display of claim 7, wherein a period of the double-speed image signal (b1) is 1/2 a period of the input image signal (a1).

9. The three-dimensional image display of claim 7, further comprising a polarization filter (70) located at the front of the display panel (30), for converting the left-eye image and the right-eye image into a first polarized state and a second polarized state, respectively, which are perpendicular to each other.

10. The three-dimensional image display of claim 7, wherein the display panel (30) is a liquid crystal display panel.

11. The three-dimensional image display of claim 7, wherein the driving signal processor (10) generates an illumination control signal (d1) for turning off illumination of the display panel (30) in an interval during which the black image signal is generated.

12. The three-dimensional image display of claim 10, wherein the driving signal processor (10) generates a double-speed image signal (b1) by doubling the input image signal (a1) upon generating a two-dimensional image signal, and generates a double-speed image signal (b1) including a black image signal between a left-eye image signal (L1+) and a right-eye image signal (R1+) upon generating a three-dimensional image signal.

13. The three-dimensional image display of claim 12, wherein the driving signal processor (10) generates the inverted driving signal (b2) having a period of sum of the left-eye image signal (L1+) and the right-eye image signal (R1+) of the double-speed image signal (b1) upon generating the three-dimensional image signal.

14. The three-dimensional image display of claim 7, further comprising:
a light source (40);
a Polarization Beam Splitter (PBS) (60) for controlling a path of light emitted from the light source (40) such that the light is incident on the display panel (30); and
a projection lens (80) for projecting an image achieved by the display panel (30).

## Patentansprüche

1. Verfahren zum Ansteuern eines 3D-Bild-Displays, umfassend:
Erzeugen eines Doppelgeschwindigkeitsbildsignals (b1), das ein Schwarzbildsignal ohne Bildschirmsignale umfasst und das Linksaugen- und Rechtsaugenbildsignale (L1+, R1+) mit einer kürzeren Periode als ein Rahmen umfasst, in Bezug auf ein Eingabebildsignal (a1) in Einheiten von Rahmen, wobei das Eingabebildsignal (a1) getrennt voneinander ein Linksaugenbild (L1) und ein Rechtsaugenbild (R1) enthält,
**dadurch gekennzeichnet, dass**
das Verfahren ferner umfasst:
Erzeugen eines invertierten Ansteuersignals (b2) zum Invertieren des Linksaugenbildsignals (L1+) oder des Rechtsaugenbildsignals (R1+) nach dem Erzeugen des Doppelgeschwindigkeitsbildsignals (b1); und
Erzeugen eines Ansteuersignals (c1) zum Ansteuern einer Anzeigetafel (30) durch Multiplizieren des Doppelgeschwindigkeitsbildsignals (b1) mit dem invertierten Ansteuersignal (b2).

2. Verfahren nach Anspruch 1, wobei das invertierte Ansteuersignal (b2) eine Periode einer Summe eines Paares des Linksaugenbildsignals (L1+) und des Rechtsaugenbildsignals (R1+) aufweist.

3. Verfahren nach Anspruch 1, wobei das Ansteuersignal (c1) ein aktives Intervall (a), während welchem die Anzeigetafel (30) durch das Linksaugenbildsignal (L1+) oder das Rechtsaugenbildsignal (R1+) angesteuert wird, und ein Dummy-Intervall (b) umfasst, während welchem die Anzeigetafel (30) nicht angesteuert wird.

4. Verfahren nach Anspruch 1, wobei das Schwarzbildsignal zwischen dem Linksaugenbildsignal (L1+) und dem Rechtsaugenbildsignal (R1+) liegt.

5. Verfahren nach Anspruch 1, ferner umfassend Erzeugen eines Beleuchtungssteuerungssignals (d1) zum Steuern von Beleuchtung, die auf die Anzeigetafel (30) entsprechend dem Doppelgeschwindigkeitsbildsignal (b1) gestrahlt wird.

6. Verfahren nach Anspruch 5, wobei das Erzeugen des Beleuchtungssteuerungssignals (d1) ein Erzeugen eines Signals zum Abschalten von Beleuchtung in einem Intervall umfasst, während welchem das Schwarzbildsignal des Doppelgeschwindigkeitsbildsignals (b1) erzeugt wird.

7. 3D-Bild-Display, umfassend:
eine Ansteuersignalverarbeitungseinheit (10) zum Erzeugen eines Doppelgeschwindigkeitsbildsignals (b1), das ein Schwarzbildsignal ohne Bildschirmsignale umfasst und das Linksaugen- und Rechtsaugenbildsignale (L1+, R1+) mit einer kürzeren Periode als ein Rahmen umfasst, in Bezug auf ein Eingabebildsignal (a1) in Einheiten von Rahmen, wobei das Eingabebildsignal (a1) getrennt voneinander ein Linksaugenbild und ein Rechtsaugenbild enthält; und
eine Anzeigetafel (30),
**dadurch gekennzeichnet, dass**
die Ansteuersignalverarbeitungseinheit (10) ein invertiertes Ansteuersignal (b2) zum Invertieren des Linksaugenbildsignals (L1+) oder des Rechtsaugenbildsignals (R1+) nach dem Erzeugen des Doppelgeschwindigkeitsbildsignals (b1) erzeugt,
wobei die Anzeigetafel (30) einen Digital/Analog-Wandler (20) zum Erzeugen eines Ansteuersignals (c1) umfasst, um die Anzeigetafel (30) durch Multiplizieren des Doppelgeschwindigkeitsbildsignals (b1) mit dem invertierten Ansteuersignal (b2) anzusteuern.

8. 3D-Bild-Display nach Anspruch 7, wobei eine Periode des Doppelgeschwindigkeitsbildsignals (b1) 1/2 der Periode des Eingabebildsignals (a1) ist.

9. 3D-Bild-Display nach Anspruch 7, ferner umfassend einen Polarisationsfilter (70), der sich an der Vorderseite der Anzeigetafel (30) befindet, zum Konvertieren des Linksaugenbilds und des Rechtsaugenbilds in einen ersten polarisierten Zustand bzw. einen zweiten polarisierten Zustand, die senkrecht zueinander sind.

10. 3D-Bild-Display nach Anspruch 7, wobei die Anzeigetafel (30) eine Flüssigkristallanzeigetafel ist.

11. 3D-Bild-Display nach Anspruch 7, wobei die Ansteuersignalverarbeitungseinheit (10) ein Beleuchtungssteuerungssignal (d1) zum Abschalten von Beleuchtung der Anzeigetafel (30) in einem Intervall erzeugt, während welchem das Schwarzbildsignal erzeugt wird.

12. 3D-Bild-Display nach Anspruch 10, wobei die Ansteuersignalverarbeitungseinheit (10) ein Doppelgeschwindigkeitsbildsignal (b1) durch Verdoppeln des Eingabebildsignals (a1) auf ein Erzeugen eines zweidimensionalen Bildsignals hin erzeugt, und ein Doppelgeschwindigkeitsbildsignal (b1), das ein Schwarzbildsignal zwischen einem Linksaugenbildsignal (L1+) und einem Rechtsaugenbildsignal (R1+) umfasst, auf ein Erzeugen eines dreidimensionalen Bildsignals hin erzeugt.

13. 3D-Bild-Display nach Anspruch 12, wobei die Ansteuersignalverarbeitungseinheit (10) das invertierte Ansteuersignal (b2) mit einer Periode einer Summe des Linksaugenbildsignals (L1+) und des Rechtsaugenbildsignals (R1+) des Doppelgeschwindigkeitsbildsignals (b1) auf ein Erzeugen des dreidimensionalen Bildsignals hin erzeugt.

14. 3D-Bild-Display nach Anspruch 7, ferner umfassend:
eine Lichtquelle (40);
einen Polarisationsstrahlteiler (PBS) (60) zum Kontrollieren eines Pfades des von der Lichtquelle (40) emittierten Lichts, so dass das Licht auf die Anzeigetafel (30) trifft; und
eine Projektionslinse (80) zum Projizieren eines durch die Anzeigeeinheit (30) erhaltenen Bilds.

## Revendications

1. Procédé de pilotage d'un afficheur d'images tridimensionnelles, comprenant :
la génération d'un signal (b1) d'images à double vitesse incluant un signal d'images en noir sans signaux d'écran et incluant des signaux (L1+, R1+) d'images pour l'oeil gauche et l'oeil droit ayant une période plus courte qu'une trame, par rapport à un signal (a1) d'images d'entrée en unités de trames, dans lequel le signal (a1) d'images d'entrée contient séparément une image pour l'oeil gauche (L1) et une image pour l'oeil droit (R1),
**caractérisé en ce que**
le procédé comprend en outre :
la génération d'un signal (b2) de pilotage inversé pour inverser le signal (L1+) d'image pour l'oeil gauche ou le signal (R1+) d'image pour l'oeil droit après génération du signal (b1) d'images à double vitesse ; et
la génération d'un signal (c1) de pilotage pour piloter un panneau d'affichage (30) en multipliant le signal (b1) d'images à double vitesse par le signal (b2) de pilotage inversé.

2. Procédé selon la revendication 1, dans lequel le signal (b2) de pilotage inversé a une période d'une somme d'une paire du signal (L1+) d'image pour l'oeil gauche et du signal (R1+) d'image pour l'oeil droit.

3. Procédé selon la revendication 1, dans lequel le signal (c1) de pilotage inclut un intervalle actif (a) durant lequel le panneau d'affichage (30) est piloté par le signal (L1+) d'image pour l'oeil gauche ou le signal (R1+) d'image pour l'oeil droit et un intervalle factice (b) durant lequel le panneau d'affichage (30) n'est pas piloté.

4. Procédé selon la revendication 1, dans lequel le signal d'images en noir est situé entre le signal (L1+) d'image pour l'oeil gauche et le signal (R1+) d'image pour l'oeil droit.

5. Procédé selon la revendication 1, comprenant en outre la génération d'un signal (d1) de commande d'éclairage pour commander un éclairage projeté sur le panneau d'affichage (30) en fonction du signal (b1) d'images à double vitesse.

6. Procédé selon la revendication 5, dans lequel la génération du signal (d1) de commande d'éclairage inclut la génération d'un signal pour couper un éclairage dans un intervalle durant lequel le signal d'images en noir du signal (b1) d'images à double vitesse est généré.

7. Afficheur d'images tridimensionnelles, comprenant :
un processeur (10) de signaux de pilotage pour générer un signal (b1) d'images à double vitesse incluant un signal d'images en noir sans signaux d'écran et incluant des signaux (L1+, R1+) d'images pour l'oeil gauche et l'oeil droit ayant une période plus courte qu'une trame, par rapport à un signal (a1) d'images d'entrée en unités de trames, dans lequel le signal (a1) d'images d'entrée contient séparément une image pour l'oeil gauche et une image pour l'oeil droit ; et
un panneau d'affichage (30),
**caractérisé en ce que**
le processeur (10) de signaux de pilotage génère un signal (b2) de pilotage inversé pour inverser le signal (L1+) d'image pour l'oeil gauche ou le signal (R1+) d'image pour l'oeil droit après génération du signal (b1) d'images à double vitesse,
dans lequel le panneau d'affichage (30) inclut un convertisseur numérique/ analogique (20) pour générer un signal (c1) de pilotage pour piloter le panneau d'affichage (30) en multipliant le signal (b1) d'images à double vitesse par le signal (b2) de pilotage inversé.

8. Afficheur d'images tridimensionnelles selon la revendication 7, dans lequel une période du signal (b1) d'images à double vitesse est ½ d'une période du signal (a1) d'images d'entrée.

9. Afficheur d'images tridimensionnelles selon la revendication 7, comprenant en outre un filtre de polarisation (70) situé sur l'avant du panneau d'affichage (30), pour convertir l'image pour l'oeil gauche et l'image pour l'oeil droit en un premier état polarisé et un deuxième état polarisé, respectivement, qui sont perpendiculaires l'un à l'autre.

10. Afficheur d'images tridimensionnelles selon la revendication 7, dans lequel le panneau d'affichage (30) est un panneau d'affichage à cristaux liquides.

11. Afficheur d'images tridimensionnelles selon la revendication 7, dans lequel le processeur (10) de signaux de pilotage génère un signal (d1) de commande d'éclairage pour couper un éclairage du panneau d'affichage (30) dans un intervalle durant lequel le signal d'images en noir est généré.

12. Afficheur d'images tridimensionnelles selon la revendication 10, dans lequel le processeur (10) de signaux de pilotage génère un signal (b1) d'images à double vitesse en doublant le signal (a1) d'images d'entrée à la génération d'un signal d'images bidimensionnelles, et génère un signal (b1) d'images à double vitesse incluant un signal d'images en noir entre un signal (L1+) d'image pour l'oeil gauche et un signal (R1+) d'image pour l'oeil droit à la génération d'un signal d'images tridimensionnelles.

13. Afficheur d'images tridimensionnelles selon la revendication 12, dans lequel le processeur (10) de signaux de pilotage génère le signal (b2) de pilotage inversé ayant une période d'une somme du signal (L1+) d'image pour l'oeil gauche et du signal (R1+) d'image pour l'oeil droit du signal (b1) d'images à double vitesse à la génération du signal d'images tridimensionnelles.

14. Afficheur d'images tridimensionnelles selon la revendication 7, comprenant en outre :
une source de lumière (40) ;
un diviseur de faisceau de polarisation (PBS) (60) pour commander un chemin de lumière émise depuis la source de lumière (40) de façon à ce que la lumière soit incidente sur le panneau d'affichage (30) ; et
un objectif de projection (80) pour projeter une image réalisée par le panneau d'affichage (30).
